## Europäisches Patentamt
## European Patent Office
## Office européen des brevets

(11) Publication number: **0 032 441**
A2

# EUROPEAN PATENT APPLICATION

(21) Application number: **81300092.4**

(22) Date of filing: **09.01.81**

(51) Int. Cl.³: **H 02 K 29/02**
**H 02 P 6/02**

(30) Priority: **10.01.80 US 111103**

(43) Date of publication of application:
**22.07.81 Bulletin 81 29**

(84) Designated Contracting States:
**DE FR GB IT NL SE**

(71) Applicant: **Hendricks, Howard F.**
**924 Powderhorn Drive**
**Lansdale Pennsylvania 19446(US)**

(72) Inventor: **Hendricks, Howard F.**
**924 Powderhorn Drive**
**Lansdale Pennsylvania 19446(US)**

(74) Representative: **SERJEANTS**
**25, The Crescent**
**Leicester, LE1 6RX(GB)**

(54) Brushless D.C. motor and control circuit therefor.

(57) A brushless d.c. motor comprises a multi-coil structure bonded to a soft iron magnetic shell (20) forming the stator of the motor. A rotor assembly (25) comprises at least a pair of permanent magnets (28) mounted on the rotor portion of the motor. Control circuitry (12) comprises sensor elements such as Hall Effect devices (30) mounted with the magnetic portion (32) thereof on the rotor shaft for rotation therewith and with stationary sensor portions (34), corresponding in number and angular location to the number of coils in the multi-coil structure. The control circuitry further comprises a programmed micro-processor (40) for analyzing the angular position of the rotating magnet assembly, for correlating the same with a required direction of rotation and for providing the proper commands to a solid state coil exciting circuit (44,45,46) to drive the coils of the multi-coil structure. The excitation of the stator coils is varied at the rate of twice the number of sensor elements (34) per revolution of the rotor (25).

The motor assembly of the invention has a high torque per unit volume efficiency and a high work output per power input efficiency, comparable to the efficiencies of conventional D.C. brush motors.

./...

FIG.6

TITLE:

Brushless D.C. Motor and Control Circuit Therefor

DESCRIPTION:

This invention relates generally to d.c. motor assemblies of which the motors have a construction wherein the coil windings are mounted on the stator portion of the motor and the rotor consists of a shaft and hub assembly with a magnet structure being carried thereby. The invention relates particularly but not exclusively to such a d.c. motor and the controls therefor, having a coil structure including a multi-coil arrangement with coil elements being diametrically opposed and serially connected, and the sensing and control circuitry including sensing elements arranged to sense the angular position of the rotor assembly and transmit this information to the control circuit which includes a position analyzer, directional control and a solid state coil driving assembly to drive the coils of the multi-coil structure.

## Background of the Invention

Brushless d.c. motors are well known in the art and their development came about due to the inherent failure of the brush-commutator assemblies of the brush-type d.c. motor. It is well known in the art that brushless d.c. motors do not possess the Unit Torque per Unit Volume Efficiencies nor the Work Output versus Power Input Efficiencies of the brush-type d.c. motors. This failure is due to the design of the brushless motor in that such designs only provide for current flow through one coil structure at a time while the brush-type motor utilizes current reversal during mechanical commutation through all the windings to double the output torque of the motor.

In order to overcome these inherent shortcomings of the brushless d.c. motor, various solid state switching techniques and motor controls have been developed.

Prior art material that is pertinent to the invention disclosed herein has been considered and the applicant believes that the following represents an up-to-date comparison and analysis of the same. The most pertinent and applicable art as considered by the applicant is as follows: Solid State Commutation for Direct Current Motors H.D. Brailsford, from Proceedings of the International Conference on Non Linear Magnetics held in Washington, D.C. April 6, 7 and 8, 1964; United States Patents to Hansen, Jr, No. 2,512,325 issued June 20, 1950 entitled "Hall Effect Commutating Apparatus;" Kawasaki et al, No. 4,035,700 issued July 12, 1977, entitled "Electronic Control Apparatus": Ryutaro Mori et al, No. 3,293,457 issued December 20, 1966, entitled Brushless D C Motor Provided with Hall-Effect Devices"; and Persson No. 4,086,519 issued April 25, 1978, entitled "Hall Effect Shaft Angle Position Encoder". Applicant's consideration of the prior art has included many other patents, but those cited hereabove are pertinent to the advantages that result in applicant's design and total circuitry concepts.

In comparison to the prior art, applicant's unit provides a high torque to unit volume ratio which, as understood in the art, results from high utilization of used copper. The prior art units do not provide for such a high utilization.

Certain of the prior art devices, such as the Hansen d.c. motor and control, utilize Hall Effect sensing techniques. The Hansen arrangement provides for a resistance change which occurs in relation to changes in flux densities. On the other hand, the applicant's unit provides a control circuitry which is a positive off-on switching technique which eliminates the possible excitation of improper coils for driving the rotor.

The present invention provides a motor assembly comprising a brushless DC motor and control circuitry therefor, including a rotor mounting at least a pair of permanent magnets, a stator including a number of excitable coils and a rotor position sensing device including a plurality of sensor elements the output of each of which is dependent on the angular position of the rotor, characterized in that a logic decoding system is provided for receiving output signals from the sensors and controlling a coil exciting circuit to vary the excitation of the stator coils at the rate of twice the number of sensor elements per revolution of the rotor.

As in any motor, that of the invention has a basic structure including a rotor and stator.  The stator portion includes a soft iron shell and a coil unit.  The coil unit preferably is a highly efficient, wave wound, multicoil unit, consisting of a plurality of individual coils wound about a coil form in skewed relation such that an individual coil includes at least two distinct elements or excitation portions arranged in diametrically opposed relation to one another on the form with the two elements being connected in series.  Moreover the individual coils are themselves preferably connected to one another in series aiding relationship.  The rotor portion of the motor includes a shaft or hub mounted for rotation within the shell of the motor and having a plurality of permanent magnets thereon.

The operative circuitry for the motor includes a sensing portion and a control portion.  The sensing portion preferably includes a Hall Effect arrangement having a plurality of sensor elements carried by or mounted on the stator and aligned and positioned with respect to the individual coils of the stator and at least a single magnet carried on the shaft of the rotor.  The signal generated by the Hall Effect sensors is delivered to the logic decoding system comprising the control portion of the circuitry for excitation of the coils.  The delivered signal from the sensors is advantageously binary coded.  The signal from each sensor may if desired be directed to the logic decoder via one of two buffer amplifiers. Selection of which amplifier is utilized is by a direction control switch for manual control of the direction of rotation of the rotor. The binary signal to the logic decoder advantageously turns on a selected one driver transistor which in turn causes switching on of two power transistor switches to provide parallel current paths through the coils. Such a condition is comparable to the current path arrangement in a conventional brush type d.c. motor.

According to the invention, if there are five sensor elements, a different set of power transistor switches is activated for each $36^{\circ}$ of rotor rotation. Similar commutation every $36^{\circ}$ in a conventional brush-type d.c. motor would require a 10 bar commutator or, in solid state applications, would require 20 power transistor switches. Thus the invention provides a brushless d.c. motor assembly having unit torque versus unit volume efficiencies that are comparable to those of brush-type d.c. motors.

It is an advantageous feature of the invention that the logic decoding system is capable of recognizing twice the number of shaft angles as the number of sensors. This can be achieved using control circuitry with a binary coded signal output, a preprogrammed logic decoder and preferably a signal inverter to provide for reversal of the rotor of the motor.

0032441

## Description of the drawings

In the drawings the same numerals or indicia are used to identify the same or similar parts through the several views. In the drawings:

Figure 1 is a perspective view of a brushless d.c. motor assembly according to the invention;

Figure 2 is an axial section through the motor illustrated in Figure 1;

Figure 3 is a cross section taken substantially along the line 3-3 of Figure 2;

Figure 4 is a cross section taken substantially along the line 4-4 of Figure 2;

Figure 5 is a cross section through a typical brushless d.c. motor;

Figure 6 is a schematic circuit diagram of the control circuitry of the motor assembly of the invention;

Figure 7 is a perspective view of the coil form upon which the multiple coils for the d.c. motor of Figure 1 are wound; and

Figure 8 is a perspective view of the coil form upon which the coils of the motor of Figure 1 are wound and illustrating the wire path for a single turn of an individual wire of a single coil.

In accordance with the accompanying drawings, applicant's invention provides a brushless d.c. motor and the control circuitry therefor and for purposes of this description may be defined to consist of a motor portion

11 and the control portion 12 which is illustrated in the schematic drawing of Figure 6 with the control portion including a sensor portion 13 which is mechanically associated with the motor portion 11.

The motor 11, in the form shown, includes an outer shell 15 having a pair of closure caps 16, 17 which may be retained on the shell through various mechanical means. At least one of the caps such as 17 is removable from the shell 15 for access to the interior thereof. Each of the caps 16, 17 is provided with bearings 18 and 19, and sealing elements and the like for rotatably mounting the rotor 25 of the motor therein. The shell 15 is provided with an internal, soft iron core 20 which may consist of a plurality of washerlike members which are stacked and affixed to the inner surface of the shell 15. The inner diameter of the shell and core is determined to provide a proper gap between the motor windings and the rotor.

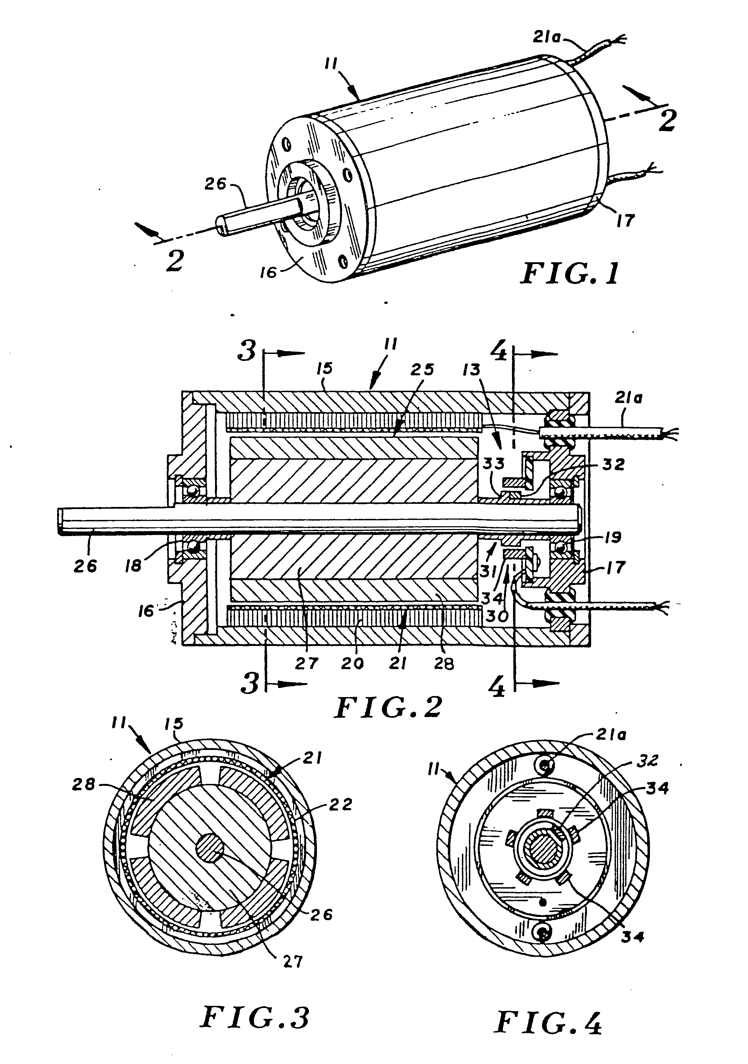

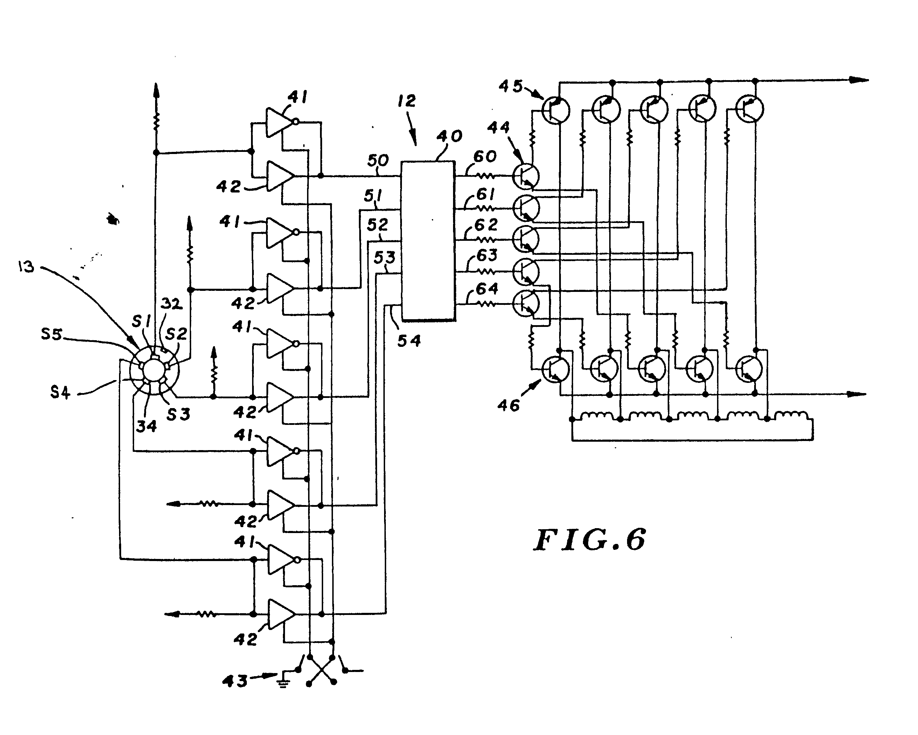

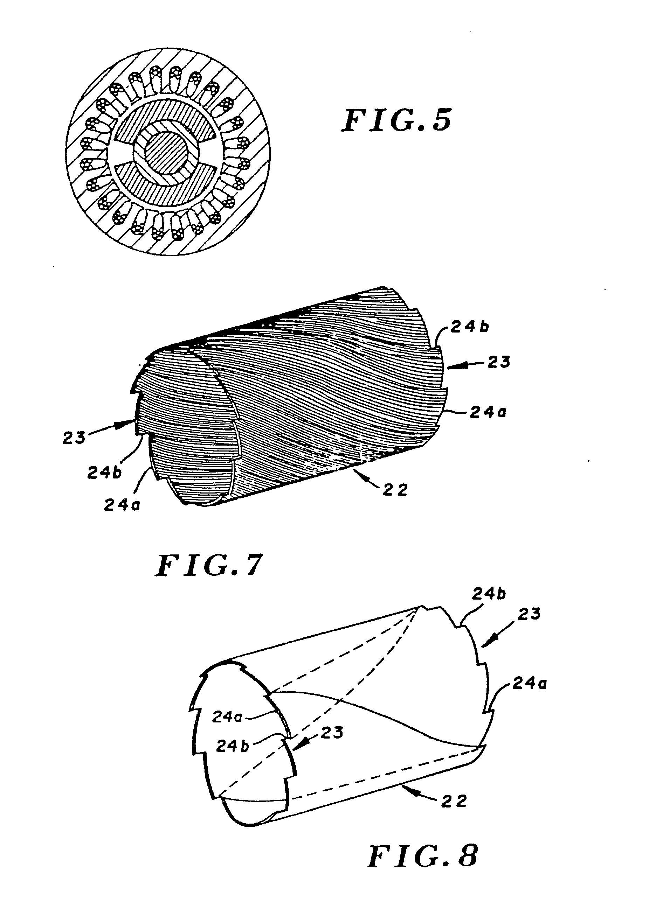

The winding of the motor 11 is designated 21 in Figures 2 and 3 and is particularly illustrated in Figures 7 and 8. Figure 7 is an illustration of the coil form upon which the coils are wound and Figure 8 is an illustration of one winding of an individual coil, the particular form illustrated and discussed being one which provides five (5) coilsets each consisting of two individual coil sections which are positioned in diametrically opposed relation to each other on the coil form and which are connected in series aiding relation. The coil form is designated 22 and consists of a relatively thin tubular member having cogs or angularly positioned steps on the ends thereof, such cogs 23 including a winding surface 24a and a position surface 24b. For a winding having five (5) coilsets, the form 22 has ten (10) steps on either end thereof and similarly has ten (10) winding and positioning surfaces on each end.

The specific geometrical configurations of the coil form embodied herein is more specifically discussed in our copending European Patent Application filed herewith and entitled "Coil and Coil Form for Brushless and Ironless Armature Motors".

For purposes of this description, a typical single wire is traced as it is turned once upon the form 22. A simple tracing of such single wire will show that it begins at an intersection of a winding surface 24a and a position surface 24b and extends in skewed fashion to a corresponding step 23 on the opposite end of the form 22 on what may be termed the periphery of the form 22. The wire then proceeds on the inner surface of the coil form 22 to the first end of the form then to the opposite end of the form to return to the first form end in a wire position adjacent to its start. The wire thus provides two elements within and two elements without the coil form 22 and the corresponding steps upon which the wire rest are positioned at 90$^{\text{O}}$ offset with one another such that a complete winding will result in a 360$^{\text{O}}$ rotary

**0032441**

shifting of the same. An·entire coil is formed by repeatedly winding the wire about the form to fill a step 23 and the angular offset of the winding surfaces 24a results in proper side-by-side positioning of the wires while the angular positioning of the positioning surfaces 24b insures that the adjacent sides of adjacent coils will be in close relation to one another.

As illustrated, ten such steps are provided for a coil that consists of five coil sets while actually providing ten excitable coils for exposure to the rotor. It should be stated that the device disclosed herein is a five (5) coil, five (5) sensor, four (4) pole device and applicant's concept is not limited to such a mathematic configuration. Applicant has provided and has proven devices which utilize conventional winding techniques as illustrated in Figure 5 and has modified the same to provide units having six (6) sets of coils, six (6) sensors and a four (4) pole magnetic structure. Such a modified device provides the characteristics of a twleve (12) bar-brush commutator motor construction.

From the comparison of the five (5) coil, five (5) sensor, four (4) pole device as illustrated and the six (6) coil, six (6) sensor, four (4) pole arrangement discussed, it should be obvious that various mathematical configurations for motors are available without departing from the scope of the applicant's invention.

The various leads for the individual windings are designated in their entirety 21a and are illustrated in Figures 2 and 4 as passing from the interior of the motor 11 through the closure cap 17.

The rotor 25 of the motor includes a shaft 26 and a hub 27 with a plurality of permanent magnets 28 mounted thereon. The shaft is preferably non-magnetic and is mounted for rotation by the bearings 18 and 19 of the shell closure caps 16 and 17. Shims or spacers, not shown but all well known in the art, are provided for aligning the rotor 25 and thus the magnets 28 with the windings of the motor 11.

In the form shown, four (4) permanent magnets 28 are illustrated as being mounted on the shaft 26 and hub 27.

A typical cross section of a two-pole magnet, d.c. brushless motor is illustrated in Figure 5 for comparison purposes. As shown therein, it is most practical to provide the stator with radial slots within which the active windings are placed and the permanent magnets are mounted on the rotor shaft. In comparison, applicant's winding structure provides a relatively flat arrangement for the windings with the windings being directly laminated to the shell or the washerlike laminations within the shell. The primary advantage of applicant's technique is to provide a motor which eliminates the inherent slot cog exhibited in both a.c. and d.c. motor fabrication technology.  This cogging characteristic is a severe error-producing parameter in position servo applications.

The sensor portion of the invention includes a first stationary section 30 and a second rotary portion 31. The rotary portion 31 includes a magnet 32 secured to the shaft 26 of the rotor 25 and the stationary section consists of, in the form shown, five (5) Hall Effect sensors 34 which are mounted on an inwardly extending portion of the cap 17 to lie adjacent the magnet 32 of the rotary portion 31 and more importantly, the sensors 34 are positively and properly aligned with respect to the coils of the winding 21.

The use and functions of Hall Effect sensors are well known in the art and applicant's application of the same is to determine the angular position of the permanent magnets 28 carried on the rotor 27.  By determining the angular position of the rotor 27, it is possible to excite the coils of the armature to drive the rotor in proper sequential fashion and mode.  This determination also allows the rotor to be started from a stopped position more efficiently.

The control portion 12 of the unit is illustrated in its entirety in Figure 6.  As so illustrated, the sensor portion 13 including the Hall Effect sensors 34 is illustrated as a signal generator.

The signal generated by the Hall Effect sensors 34 is transmitted to a preprogrammed logic decoder 40 through one of two buffer amplifiers 41,42 which amplifiers are selected through a directional control switching mechanism 43.

The power driver stage of the circuit is wired to prevent the inadvertent turn on of a complementary pair of transistors and is arranged so that a command from the logic decoder 40 will turn on one driver transistor 44 at a time which will thereby provide a turn-on current to the bases of two power transistors 45,46. This condition establishes parallel current paths through the motor windings and is comparable to the current path arrangement in a conventional brush-type d.c. motor. It should be noted that a basic design philosophy of brushless motors is a motor design that requires the least number of power switches adequately to meet performance requirements, and the logic arrangement of the circuit illustrated in Figure 6 meets this requirement.

In the four (4) pole rotating magnet structure in combination with the five (5) coil, five (5) sensor structure provided herein, a different set of power transistor switches is activated for each $36^{\circ}$ of rotor rotation. The following logic chart sets forth the binary coded signal from the sensors to the driver transistors where S1, S2, S3, S4 and S5 indicate the sensors, 50, 51, 52, 53 and 54 indicate the input terminals to the logic decoder 40 and 60, 61, 62, 63 and 64 indicate the output terminals of the logic decoder 40 as directed to the driver transistors 44.

| Shaft Angle | V from Sensor | | | | | In to Decoder (Clockwise) | | | | | Out from Decoder | | | | |
|---|---|---|---|---|---|---|---|---|---|---|---|---|---|---|---|
| | S1 | S2 | S3 | S4 | S5 | 50 | 51 | 52 | 53 | 54 | 60 | 61 | 62 | 63 | 64 |
| 0° | 0 | 1 | 1 | 1 | 1 | 0 | 1 | 1 | 1 | 1 | 1 | 0 | 0 | 0 | 0 |
| 36° | 0 | 0 | 1 | 1 | 1 | 0 | 0 | 1 | 1 | 1 | 0 | 1 | 0 | 0 | 0 |
| 72° | 1 | 0 | 1 | 1 | 1 | 1 | 0 | 1 | 1 | 1 | 0 | 0 | 1 | 0 | 0 |
| 108° | 1 | 0 | 0 | 1 | 1 | 1 | 0 | 0 | 1 | 1 | 0 | 0 | 0 | 1 | 0 |
| 144° | 1 | 1 | 0 | 1 | 1 | 1 | 1 | 0 | 1 | 1 | 0 | 0 | 0 | 0 | 1 |
| 180° | 1 | 1 | 0 | 0 | 1 | 1 | 1 | 0 | 0 | 1 | 1 | 0 | 0 | 0 | 0 |
| 216° | 1 | 1 | 1 | 0 | 1 | 1 | 1 | 1 | 0 | 1 | 0 | 1 | 0 | 0 | 0 |
| 252° | 1 | 1 | 1 | 0 | 0 | 1 | 1 | 1 | 0 | 0 | 0 | 0 | 1 | 0 | 0 |
| 288° | 1 | 1 | 1 | 1 | 0 | 1 | 1 | 1 | 1 | 0 | 0 | 0 | 0 | 1 | 0 |
| 314° | 0 | 1 | 1 | 1 | 0 | 0 | 1 | 1 | 1 | 0 | 0 | 0 | 0 | 0 | 1 |
| 360° | 0 | 1 | 1 | 1 | 1 | 0 | 1 | 1 | 1 | 1 | 1 | 0 | 0 | 0 | 0 |

and conversely, the following table exists for a counter-clockwise condition:

| | S1 | S2 | S3 | S4 | S5 | 50 | 51 | 52 | 53 | 54 | 60 | 61 | 62 | 63 | 64 |
|---|---|---|---|---|---|---|---|---|---|---|---|---|---|---|---|
| 0° | 0 | 1 | 1 | 1 | 1 | 1 | 0 | 0 | 0 | 0 | 0 | 0 | 0 | 1 | 0 |
| 36° | 0 | 0 | 1 | 1 | 1 | 1 | 1 | 0 | 0 | 0 | 0 | 0 | 1 | 0 | 0 |
| 72° | 1 | 0 | 1 | 1 | 1 | 0 | 1 | 0 | 0 | 0 | 0 | 1 | 0 | 0 | 0 |
| 108° | 1 | 0 | 0 | 1 | 1 | 0 | 1 | 1 | 0 | 0 | 1 | 0 | 0 | 0 | 0 |
| 144° | 1 | 1 | 0 | 1 | 1 | 0 | 0 | 1 | 0 | 0 | 0 | 0 | 0 | 0 | 1 |
| 180° | 1 | 1 | 0 | 0 | 1 | 0 | 0 | 1 | 1 | 0 | 0 | 0 | 0 | 1 | 0 |
| 216° | 1 | 1 | 1 | 0 | 1 | 0 | 0 | 0 | 1 | 0 | 0 | 0 | 1 | 0 | 0 |
| 252° | 1 | 1 | 1 | 0 | 0 | 0 | 0 | 0 | 1 | 1 | 0 | 1 | 0 | 0 | 0 |
| 288° | 1 | 1 | 1 | 1 | 0 | 0 | 0 | 0 | 0 | 1 | 1 | 0 | 0 | 0 | 0 |
| 314° | 0 | 1 | 1 | 1 | 0 | 1 | 0 | 0 | 0 | 1 | 0 | 0 | 0 | 0 | 1 |
| 360° | 0 | 1 | 1 | 1 | 1 | 1 | 0 | 0 | 0 | 0 | 0 | 0 | 0 | 1 | 0 |

For the above: the "O" condition is interpreted when the sensor output voltages are low and the "1" condition is interpreted when the sensor output voltages are high.

Applicant's technique shown, and only for the purposes of illustration, utilizes a 4-Pole Magnet, rotating structure and five (5) sets of coils of which each set of coils consists of two coils placed in diametrically opposed relation to each other and connected in series aiding relation. Each coil induces 1/2 of the voltage of a 2 pole motor but as the coils are connected in series aiding relation, the total voltage induced across the transistor tie points is equivalent to that of a 2 pole, 5 coil motor. It should also be noted that the stator resistance is twice that of a 2 pole, 5 coil motor but the number of commutation cycles has been doubled while maintaining the number of power transistor switches at a practical, and as stated, least number.

It should also be noted that the applicant has provided herein a relation which may be varied dependent upon the conditions of the application. For a very low torque ripple, without a consideration for added expense, additional excitation coils and additional sensors could be provided which in turn would provide for a greater number of shaft angle positions.

CLAIMS:

1. A motor assembly comprising a brushless DC motor and control circuitry therefor, including a rotor mounting at least a pair of permanent magnets, a stator including a number of excitable coils and a rotor position sensing device including a plurality of sensor elements the output of each of which is dependent on the angular position of the rotor, characterized in that a logic decoding system (12) is provided for receiving output signals (50,51,52,53,54) from the sensors and controlling a coil exciting circuit (44,45,46) to vary the excitation of the stator coils at the rate of twice the number of sensor elements per revolution of the rotor.

2. A motor assembly according to claim 1, wherein each of the coils comprises series connected coil elements diametrically opposed to one another on the stator.

3. A motor assembly according to either preceding claim, wherein the coils are connected to one another in series aiding relationship.

4. A motor assembly according to any preceding claim, wherein the number of excitable coil elements of the stator is twice the number of the sensor elements.

5. A motor assembly according to any preceding claim, further comprising signal inverting means (43) for inverting the output signals (50,51,52,53,54) from the sensors to the logic decoding system (12) for reversal of the rotor direction.

6. A motor assembly according to any preceding claim, wherein the rotor mounts four permanent magnets thereon.

7. A motor assembly according to claim 6, wherein the stator includes five excitable coils.

8. A motor assembly according to claim 7, wherein the rotor position sensing device includes five sensor elements.

9. A motor assembly according to any preceding claim, wherein the sensor elements are permanent magnets and the rotor position sensing device is a Hall Effect sensing device.

10. A motor assembly according to any preceding claim, wherein the coils of the stator are bonded to a soft iron magnetic shell.

FIG.1

FIG.2

FIG.3

FIG.4

FIG.6

0032441

FIG.5

FIG.7

24b

23

24a

23

24b

24a

22

FIG.8

24b

23

24a

24a

24b

23

22